# EUROPEAN PATENT SPECIFICATION

(11) **EP 3 467 582 B1**
(45) Date of publication and mention of the grant of the patent: **30.06.2021**
(21) Application number: 16904149.8
(22) Date of filing: 26.08.2016
(51) Int. Cl.: G02F 1/15, G02F 1/155, G02F 1/1523

(54) **ELECTROCHROMIC ELEMENT COMPRISING ELECTROCHROMIC LAYER AND ION STORAGE LAYER AND METHOD FOR PREPARING SAME**
ELEKTROCHROMES ELEMENT MIT ELEKTROCHROMER SCHICHT UND IONENSPEICHERSCHICHT UND VERFAHREN ZUR HERSTELLUNG DAVON
ÉLÉMENT ÉLECTROCHROMIQUE COMPRENANT UNE COUCHE ÉLECTROCHROMIQUE ET UNE COUCHE DE STOCKAGE D'IONS ET SON PROCÉDÉ DE PRÉPARATION

(30) Priority: 03.06.2016 KR 20160069170
(43) Date of publication of application: 10.04.2019
(73) Proprietor: INDUSTRY-UNIVERSITY COOPERATION FOUNDATION HANYANG UNIVERSITY ERICA CAMPUS, Sangrok-gu Ansan-si, Gyeonggi-do 15588 (KR); Seoul National University R&DB Foundation, Seoul 08826 (KR); University Of Ulsan Foundation For Industry Cooperation, Ulsan 44610 (KR)
(72) Inventor: LEE, Sunyong, Seongnam-si Gyeonggi-do 13589 (KR); AHN, Sung-Hoon, Seoul 08826 (KR); CHU, Won-Shik, Seoul 08826 (KR); CHUN, Doo-Man, Busan 48115 (KR); KIM, Hyungsub, Gwangmyeong-si Gyeonggi-do 14206 (KR); CHOI, Dahyun, Anyang-si Gyeonggi-do 14100 (KR); KIM, Kwangmin, Suwon-si Gyeonggi-do 16687 (KR)
(74) Representative: J A Kemp LLP
(86) International application number: PCT/KR2016/009513
(87) International publication number: WO 2017/209350

(56) References cited:
- CN-A- 103 186 004
- KR-A- 20080 082 083
- KR-A- 20140 041 117
- KR-A- 20140 045 329
- US-A1- 2007 097 483
- US-A1- 2011 104 369
- US-A1- 2014 272 394
- KIM HYUNGSUB ET AL: "Novel fabrication of an electrochromic antimony-doped tin oxide film using a nanoparticle deposition system", APPLIED SURFACE SCIENCE, ELSEVIER, AMSTERDAM, NL, vol. 377, 24 March 2016 (2016-03-24), pages 370-375, XP085145846, ISSN: 0169-4332, DOI: 10.1016/J.APSUSC.2016.03.170

## Description

### BACKGROUND

### 1. Field

The present disclosure relates to an electrochromic device including an electrochromic layer and an ion storage layer and a method of fabricating the same, and more particularly, to an electrochromic device including an electrochromic layer and an ion storage layer which includes nickel oxide and titanium oxide. The nickel oxide and the titanium oxide are observed in particle shape.

### 2. Description of the Related Art

The electrochromism is phenomenon that color of material is transformed by oxidation and reduction reactions when electric current flows to the material. A display in which reactive material moves and changes its color by oxidation and reduction reactions to occur a chemical change when voltage is applied from the outside using the electrochromic phenomenon is known as the electrochromic device.

Particularly, the market of a smart window in technology using the electrochromic device is to be in the limelight. According to BBC survey in 2013, the smart window market is shown extremely steep growth at an annual growth rate of 21.6%. However, patents of the smart window field are distributed at 79% in USA, 11% in Europe, 6% in Japan and 4% in Korea such that most of patents are concentrated in USA. Thus, the necessity of patent possession for the smart window and the electrochromic device are on the rise and then research thereof is being active in the country.

For example, Korea Patent Registration No. 10-2008-0022324 (Application No. 10-2006-0085616, Applicant: LG Chemical) discloses an electrochromic device in which an electrochromic layer pattern and an ion conductive layer are disposed to have large surface are therebetween such that response speed and endurance are enhanced.

US 2007/097483 describes an electrode structure of an electrochromic device. CN103186004 describes an electrochromic device with nanometer electrochromic material structure. Kim et al. (Applied Surface Science (2016), 377, 370-375) describes fabrication of an electrochromic antimony-doped tin oxide film using a nanoparticle deposition system.

### SUMMARY

Embodiments of the inventive concepts may provide an electrochromic device with high reliability and a method of fabricating the same.

Embodiments of the inventive concepts may also provide an electrochromic device with enhanced electrochromic efficiency and a method of fabricating the same.

Embodiments of the inventive concepts may further provide an electrochromic device and method of fabricating the same capable of simplifying process and reducing process cost.

Embodiments of the inventive concepts may further provide an electrochromic device which can be fabricated in large area and a method of fabricating the same.

Embodiments of the inventive concepts may further provide an electrochromic device with enhanced electrochromic efficiency and a method of fabricating the same.

In an aspect, the invention provides an electrochromic device comprising a first substrate, a second substrate opposite the first substrate, an electrolyte provided between the first substrate and the second substrate, a first electrode provided between the first substrate and the electrolyte, an ion storage layer including titanium oxide and nickel oxide provided between the first electrode and the electrolyte, wherein particles of the nickel oxide and the titanium oxide are observable by SEM in particle shape, a second electrode provided between the second substrate and the electrolyte, and an electrochromic layer provided between the second electrode and the electrolyte.

In an embodiment, the electrolyte may include a non-PMMA electrolyte.

In an embodiment, heat ray transmittance to the first light including visible light region of an incident light may be 22% and less, the heat ray transmittance to the second light comprising infrared region of the incident light may be 9% and less.

In an embodiment, the electrochromic layer may include tungsten oxide.

In an embodiment, particles of the tungsten oxide may be observed in the electrochromic layer.

In another aspect, the present invention provides a method of fabricating an electrochromic device comprising preparing source powder in a powder storage tank, accelerating the source powder using pressure difference between the powder storage tank and a chamber, heating a substrate in the chamber, and providing the accelerated source powder to the heated substrate to form at least one of an ion storage layer or an electrochromic layer;
wherein the source powder comprises first source powder containing nickel oxide and titanium oxide, the heating of the substrate in the chamber comprises heating a first substrate in the chamber, and the first source powder which is accelerated using the pressure difference between the powder storage tank and the chamber is provided to the first substrate to form the ion storage layer.

In an embodiment, the source powder may include second source powder containing tungsten oxide, the heating of the substrate in the chamber may include heating a second substrate in the chamber, and the second source powder which is accelerated using the pressure difference between the powder storage tank and the chamber may be provided to the second substrate to form the electrochromic layer.

In an embodiment, the source powder may include first source powder containing nickel oxide and titanium oxide and second source powder containing tungsten oxide, the heating of the substrate in the chamber may include heating the first and the second substrates in the chamber, and the first source powder and the second source powder which are accelerated using the pressure difference between the powder storage tank and the chamber may be provided to the first substrate and the second substrate to form the ion storage layer and the electrochromic layer, respectively. The temperature of the first substrate and the second substrate may be different to each other.

In an embodiment, wherein the temperature of the first substrate may be higher than the temperature of the second substrate.

### BRIEF DESCRIPTION OF THE DRAWINGS

FIG. 1 is a flowchart illustrating a method of fabricating an electrochromic device according to some embodiments of the inventive concepts.
FIG. 2 is a schematic view illustrating a method of fabricating an electrochromic device according to some embodiments of the inventive concepts.
FIG. 3 is a schematic view illustrating a method of fabricating an electrochromic device having an ion layer and an electrochromic layer according to some embodiments of the inventive concepts.
FIG. 4 is a schematic view illustrating a method of fabricating an ion storage layer according to some embodiments of the inventive concepts.
FIG. 5 is a schematic view illustrating a method of fabricating an electrochromic layer according to some embodiments of the inventive concepts.
FIG. 6 is a SEM image of a surface of the ion storage layer according to an embodiment of the inventive concepts and a comparative example.
FIG. 7 is a graph illustrating charge quantity variation versus time of the electrochromic device according to and embodiment of the inventive concepts and a comparative example.
FIG. 8 is a graph illustrating a result of the cyclic voltammetry measurement of an electrochromic device according to an embodiment of the inventive concepts and a comparative example.
FIG. 9 is a graph illustrating transmittance variation versus wavelength of an electrochromic device according to an embodiment of the inventive concepts and a comparative example.
FIG. 10 is a SEM image of a surface of an electrochromic layer according to an embodiment of the inventive concepts and comparative examples.
FIG. 11 is a graph illustrating a result of impedance measurement of an electrochromic layer according to an embodiment of the inventive concepts and comparative examples.
FIG. 12 is a graph illustrating transmittance variation versus wavelength of an electrochromic device according to an embodiment of the inventive concepts and comparative examples.
FIG. 13 is a graph illustrating transmittance variation versus wavelength of an electrochromic device according to an embodiment of the inventive concepts and comparative examples.
FIG. 14 is a graph illustrating transmittance variation versus a glass substrate temperature of the first substrate of an electrochromic device according to an embodiment of the inventive concepts and comparative examples.
FIG. 15 is a graph illustrating transmittance variation versus wavelength when current is supplied with changing supplying time to an electrochromic device according to an embodiment of the inventive concepts.
FIG. 16 is a graph illustrating transmittance variation versus time of an electrochromic device according to an embodiment of the inventive concepts.
FIG. 17 is a graph illustrating transmittance variation versus wavelength of electrolytes of electrochromic device with or without PMMA which are fabricated according to an embodiment of the inventive concepts and a comparative example.
FIG. 18 is a graph illustrating transmittance variation versus wavelength of glasses in which electrochromic devices according to an embodiment of the inventive concepts and a comparative example are used or not.
FIG. 19 is a graph illustrating transmittance variation versus wavelength of an electrochromic device according to an embodiment of the inventive concepts and a comparative example.

### DETAILED DESCRIPTION OF THE EMBODIMENTS

The inventive concepts will now be described more fully hereinafter with reference to the accompanying drawings, in which exemplary embodiments of the inventive concepts are shown. It should be noted, however, that the inventive concepts are not limited to the following exemplary embodiments, and may be implemented in various forms. Accordingly, the exemplary embodiments are provided only to disclose the inventive concepts and let those skilled in the art know the category of the inventive concepts.

It will be understood that when an element such as a layer, region or substrate is referred to as being "on" another element, it can be directly on the other element or intervening elements may be present. In addition, in the drawings, the thicknesses of layers and regions are exaggerated for clarity.

It will be also understood that although the terms first, second, third etc. may be used herein to describe various elements, these elements should not be limited by these terms. These terms are only used to distinguish one element from another element. Thus, a first element in some embodiments could be termed a second element in other embodiments without departing from the teachings of the present invention. Exemplary embodiments of aspects of the present inventive concepts explained and illustrated herein include their complementary counterparts. As used herein, the term "and/or" includes any and all combinations of one or more of the associated listed items.

The term "non-PMMA electrolyte" is used herein for the meaning that the electrolyte does not contain PMMA.

The terminology used herein is for the purpose of describing particular embodiments only and is not intended to limit the invention. As used herein, the singular terms "a", "an" and "the" are intended to include the plural forms as well, unless the context clearly indicates otherwise. It will be further understood that the terms "comprises", "comprising", "includes", "including", "have", "has" and/or "having" when used herein, specify the presence of stated features, integers, steps, operations, elements, and/or components, but do not preclude the presence or addition of one or more other features, integers, steps, operations, elements, components, and/or groups thereof. Furthermore, it will be understood that when an element is referred to as being "connected" or "coupled" to another element, it may be directly connected or coupled to the other element or intervening elements may be present.

In addition, in explanation of the present invention, the descriptions to the elements and functions of related arts may be omitted if they obscure the subjects of the inventive concepts.

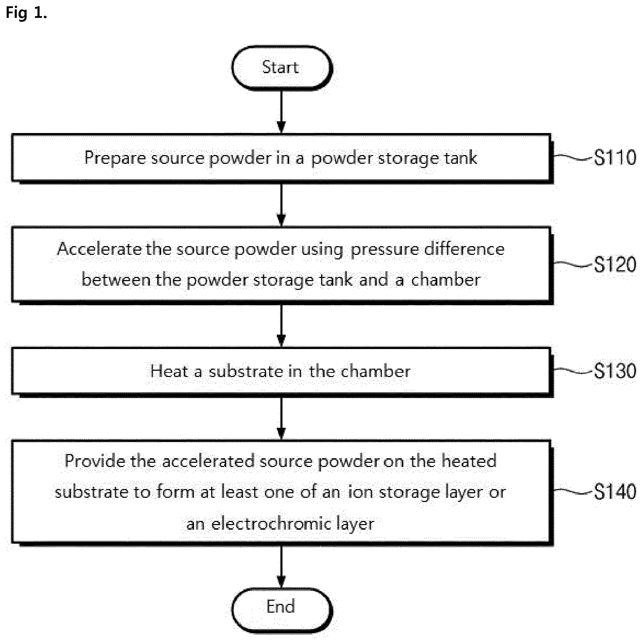

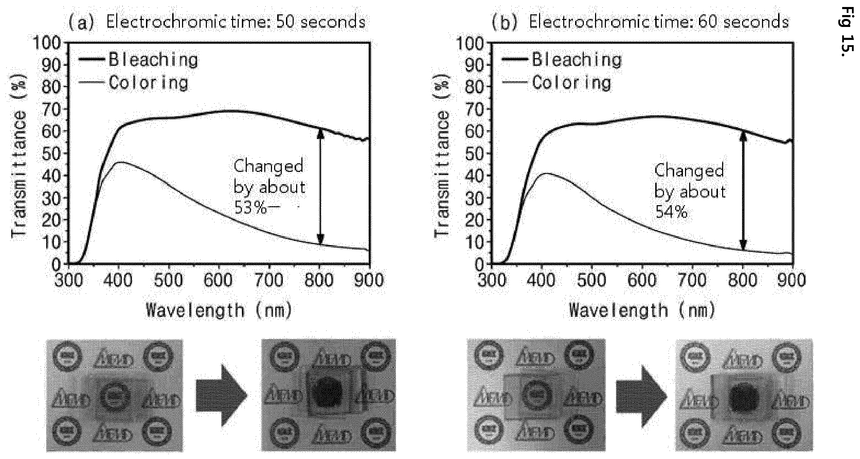

FIG. 1 is a flowchart illustrating a method of fabricating an electrochromic device according to some embodiments of the inventive concepts.

Referring to FIG. 1, source powder is prepared in a powder storage tank: S110. The source powder comprises first source powder and may include second source powder. The first source powder contains nickel oxide and titanium oxide. For example, the first source powder may be compound powder of nickel oxide and titanium oxide. In an embodiment, the second source powder may contain tungsten (W) and oxygen (O). For example, the second source powder may be tungsten oxide powder. The first source powder and the second source powder may be prepared in the powder storage tanks, respectively.

The source powder is accelerated using pressure difference between the powder storage tank and a chamber which may be connected with the powder storage tank: S120. In an embodiment, the source powder in the powder storage tank may be sprayed, and the source powder may be accelerated at supersonic by the pressure difference between the powder storage tank and the chamber and injected into the chamber.

A substrate in the chamber is heated: S130. For example, the substrate may be heated by using a hot plate and so on. The substrate may include a first substrate and a second substrate. For example, the first source powder may be provided to the heated first substrate when the first substrate is disposed in the chamber, and the second source powder may be provided to the heated second substrate when the second substrate is disposed in the chamber.

The first substrate and the second substrate may be transparent substrates (for example, glass substrate, plastic substrate and so on). An electrode which is formed of transparent material with conductivity may be disposed on the first substrate and the second substrate. For example, the first substrate and the second substrate may be FTO glass. Further, a first electrode may be disposed on the first substrate and a second electrode may be disposed on the second substrate. In this case, first source powder may be provided on the first electrode and second source powder may be provided on the second electrode.

In an embodiment, the temperature of the first substrate and the second substrate may be different from each other. Specifically, the first substrate may be higher than the second substrate in temperature.

The accelerated source powder is provided on the substrate which is heated in the chamber to form at least one of an ion storage layer or an electrochromic layer: S140. The first source powder is accelerated by pressure difference between the powder storage tank and the chamber, and the accelerated first source powder is provided on the first substrate to form the ion storage on the first substrate. The ion storage layer may contain nickel oxide and titanium oxide, and the nickel oxide and the titanium oxide may be observed in particle shape.

Further, when the second source powder in the powder storage tank, the second source powder may be accelerated by pressure difference between the powder storage tank and the chamber, and the accelerated second source powder may be provided on the second substrate to form the electrochromic layer on the second substrate. The electrochromic layer may contain tungsten oxide, and the tungsten oxide may be observed in particle shape.

Also disclosed herein are methods in which the electrochromic layer may be formed as the above description and the ion storage layer may be formed using sol-gel method, sputtering, chemical vapor deposition, physical vapor deposition and so on. Other embodiments of the inventive concepts, the ion storage layer may be formed as the above description and the electrochromic layer may be formed using sol-gel method, sputtering, chemical vapor deposition, physical vapor deposition and so on.

When the accelerated source powder is provided on the substrate, the source powder may be destroyed into source powder fragments, and the source powder fragments may be aggregated to form the ion storage layer and the electrochromic layer.

As described above, the source powder may be provided on the heated substrate to form the source powder fragments from the source powder easily. Thus, the ion source layer and the electrochromic layer which are formed by aggregating the source powder fragments may be improved in properties.

However, if the substrate is heated over a standard temperature during the heating step, the fragments may be too fine to decrease characteristics of the ion storage layer and the electrochromic layer. And the fragments may not be formed easily if the substrate is heated under the standard temperature.

In an embodiment, the electrochromic device may be formed by forming the ion storage layer and the electrochromic layer, disposing the first substrate with the ion storage layer and the second substrate with electrochromic layer in opposite to each other and injecting an electrolyte between the first substrate and the second substrate. The electrolyte may include a non-PMMA electrolyte. For example, the electrolyte may be 1M of LiClO₄ (PC:EC).

According to embodiments of the inventive concepts, the electrochromic device may include the ion storage layer and the electrochromic layer which are formed by providing the source powder on the heated substrate. Further, the ion storage layer may contain nickel oxide and titanium oxide. As a result, characteristics of the ion storage layer and the electrochromic layer may be improved. Further, the manufacturing process of the ion storage layer and the electrochromic layer may be simplified in contrast to performing additional thermal treatment after forming the ion storage layer and the electrochromic layer.

Furthermore, according to embodiments of the inventive concepts, proportion of the nickel oxide and the titanium oxide may be adjusted during forming the first source powder to control constituents of the ion storage layer in the electrochromic device easily. Thus, the electrochromic device having enhanced electrochromic efficiency and the method of fabricating the same may be provided.

If the ion storage layer and the electrochromic layer is formed by the sol-gel method in contrast to the above embodiments of the inventive concepts, additional thermal treatment may be further performed. Thus, the process time is increased and the process cost is increased such that a process for large area is unsuitable. Further, if the ion storage layer and the electrochromic layer is formed by sputtering method, there are problems that the process cost may be increased caused by high vacuum condition and deterioration probability of the ion storage layer and the electrochromic layer may be increased by thermal and electrical environment and the process for large area may not be suitable. Furthermore, if the ion storage layer and the electrochromic layer are formed by CVD method, there is problem that the material for coating and process at high temperature are limited.

However, according to embodiments of the inventive concepts as described above, the ion storage layer containing nickel oxide and titanium oxide and the electrochromic layer containing tungsten oxide may be formed on the heated first substrate and second substrate using the first source powder and the second source powder. Thus, the electrochromic device with high reliability of which electrochromic property is improved and process is simplified.

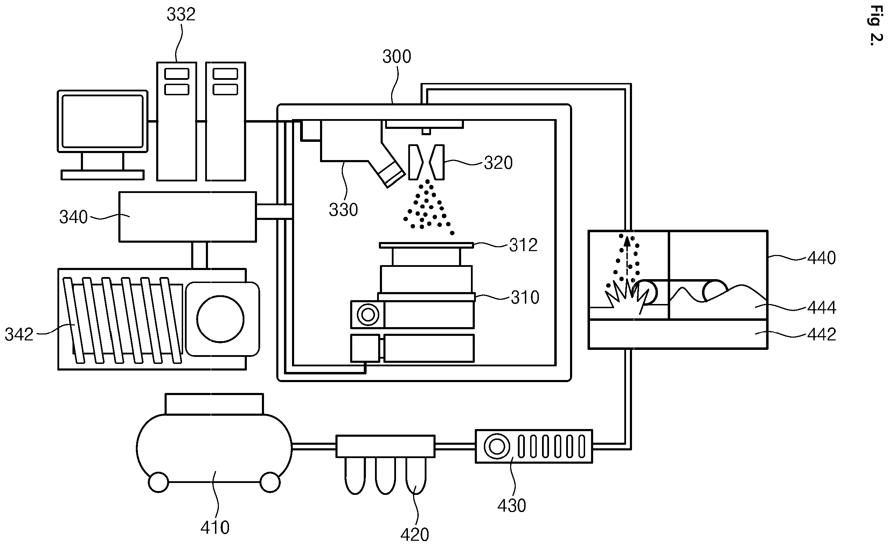

An apparatus for fabricating an electrochromic device according to embodiments of the inventive concepts will be described hereinafter with referring to FIG. 2.

FIG. 2 is a schematic view illustrating a method of fabricating an electrochromic device according to some embodiments of the inventive concepts.

Referring to FIG. 2, the apparatus of fabricating the electrochromic device may include a chamber 100, a stage 110, a nozzle 120, a camera 130, a control unit 132, a chamber pressure adjusting unit 140, a pump 142, an air compressing unit 210, a filter 220, a regulator 230, a powder storage tank 240 and spray generator 242.

The stage 110 may be disposed in the chamber 100. A substrate 112 may be loaded on the stage 110. The stage 110 may be capable of moving along first and second directions which is parallel with the ground and moving along a third direction which is perpendicular with the ground. The substrate 112 may be the first substrate and the second substrate, as described with referring to FIG. 1.

The air compressing unit 210 may compress air to provide compressed air. The compressed air may be permeated through the filter 220 such that dust, oil and etc. are removed. The compressed air may pass the regulator 230 and provided in the powder storage tank 240.

Source powder 244 may be stored in the powder storage tank 240. The source powder 244 may include first source powder containing nickel, titanium and oxygen and second source powder containing tungsten and oxygen, as described with referring to FIG. 1.

The spray generator 242 may be disposed in the powder storage tank 240. The source powder 244 stored in the powder storage tank 240 is sprayed by the spray generator 242. The sprayed source powder 244 may be injected on the substrate 112 in the chamber 100 by the compressed air which is provided from the air compressing unit 210 while the sprayed source powder 244 is accelerated by pressure between the powder storage tank 240 and the chamber 100.

The chamber pressure adjusting unit 140 and the pump 142 may keep the interior of the chamber 100 at vacuum status. Thus, pressure difference between the powder storage tank 240 may be maintained at substantially constant, and the sprayed source powder 244 may be accelerated by the pressure difference and then provided on the substrate 112 through the nozzle 120. The chamber 100 may be atmospheric circumstance. The chamber pressure adjusting unit 140 may be controlled by the control unit 132.

The ion storage layer containing nickel oxide and titanium oxide may be fabricated by the first source powder which is injected on the first substrate, as described with referring to FIG. 1. Further, the electrochromic layer containing tungsten oxide may be fabricated by the second source powder which is injected on the second substrate, as described with referring to FIG. 1.

The camera 130 may take the ion storage layer and the electrochromic layer which are formed on the substrate 112 to transmit to the control unit 132. A user may observe a process of forming the ion storage layer and the electrochromic layer by the control unit 132.

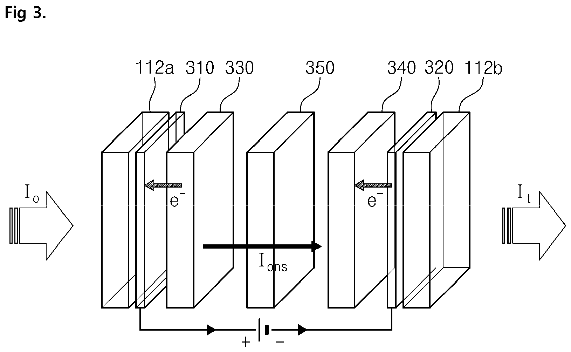

A method of fabricating the ion storage layer and the electrochromic layer according to embodiments of the inventive concept and the ion storage layer and the electrochromic layer which are fabricated using the same will be described with referring to FIGS. 3 through 5.

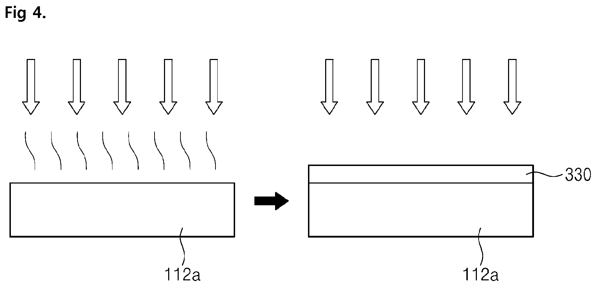

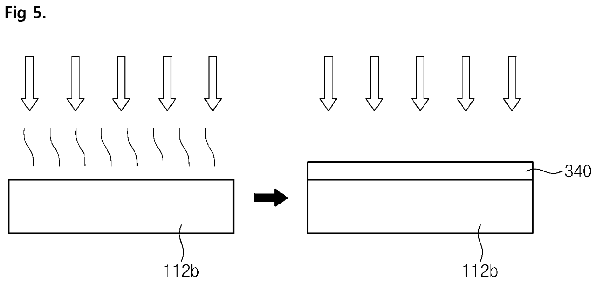

FIG. 3 is a schematic view illustrating a method of fabricating an electrochromic device having an ion layer and an electrochromic layer according to some embodiments of the inventive concepts, FIG. 4 is a schematic view illustrating a method of fabricating an ion storage layer according to some embodiments of the inventive concepts and FIG. 5 is a schematic view illustrating a method of fabricating an electrochromic layer according to some embodiments of the inventive concepts.

Referring to FIGS. 3 through 5, the electrochromic device may include a first substrate 112a, a second substrate 112b, a first electrode 310, a second electrode 320, an ion storage layer 330, an electrochromic layer 340 and an electrolyte 350.

The first substrate 112a and the second substrate 112b may be opposite to each other. The first substrate 112a and the second substrate 112b may be transparent substrate (for example, glass). The first substrate 112a and the second substrate 112b may be formed of the same material.

The electrolyte 350 may be disposed between the first substrate 112a and the second substrate 112b. The electrolyte 350 may include LiClO₄ (PC:EC). In some embodiments, the electrolyte layer 350 may be non-PMMA electrolyte which does not contain PMMA. Accordingly, electrochromic efficiency of the electrochromic device may be improved.

The first electrode 310 may be disposed between the first substrate 112a and the electrolyte 350. The second electrode 320 may be disposed between the second substrate 112b and the electrolyte 350. The first electrode 310: and the second substrate 112b may be opposite to each other. The first electrode 310 and the second electrode 320 may be formed of a transparent oxide film (TCO). The first electrode 310 and the second electrode 320 may be formed of the same material.

The ion storage layer 330 may be disposed between the first electrode 310 and the electrolyte 350. The ion storage layer 330 may include nickel oxide and titanium oxide fabricated by the method which is describe with referring to FIG. 1. Specifically, the ion storage layer may be formed by providing the first source powder containing the nickel oxide and the titanium oxide on the heated first substrate 112a, as shown in FIG. 4. Further, the ion storage layer 330 may be fabricated by the apparatus which is described with referring to FIG. 2. According to other embodiments of the inventive concepts, the first source powder may contain tin oxide doped with antimony.

The electrochromic layer 340 may be disposed between the first electrode 320 and the electrolyte 350. The electrochromic layer 340 may include nickel oxide and titanium oxide fabricated by the method which is describe with referring to FIG. 1. Further specifically, the electrochromic layer may be formed by providing the second source powder containing the tungsten oxide on the heated second substrate 112b, as shown in FIG. 5. Further, the electrochromic layer 340 may be fabricated by the apparatus which is described with referring to FIG. 2.

The result of characteristics evaluation and a specific experimental example of the electrochromic device having the ion storage layer and the electrochromic layer which are fabricated using the method of fabricating the ion storage layer and the electrochromic layer according to the above embodiments of the inventive concepts will be described hereinafter.

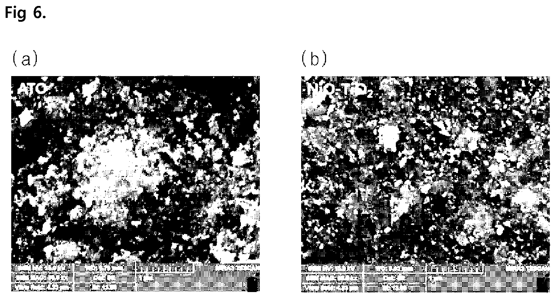

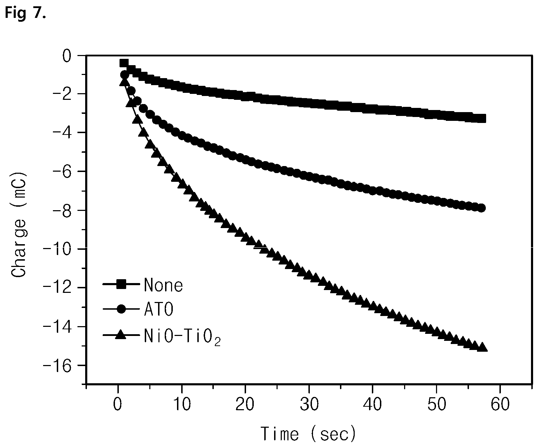

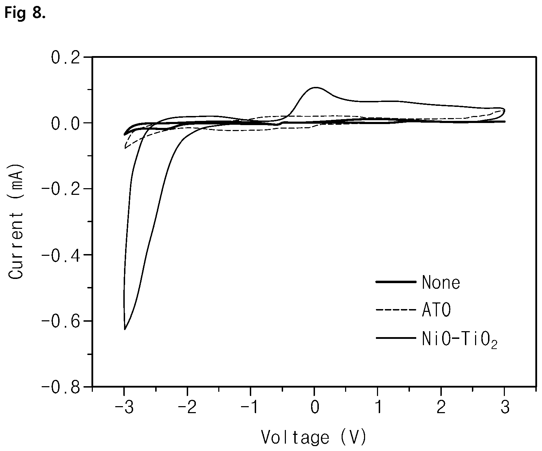

FIG. 6 is a SEM image of a surface of the ion storage layer according to an embodiment of the inventive concepts and a comparative example, FIG. 7 is a graph illustrating charge quantity variation versus time of the electrochromic device according to and embodiment of the inventive concepts and a comparative example, and FIG. 8 is a graph illustrating a result of the cyclic voltammetry measurement of an electrochromic device according to an embodiment of the inventive concepts and a comparative example.

Referring to FIG. 6, a glass substrate and source powder containing NiO-TiO₂ were prepared.

The source powder was provided on the glass substrate which was heated at 150°C to form an ion storage layer of 300nm thickness according to a first embodiment of the inventive concepts. A distance between the glass substrate and a nozzle was kept at 3mm and stage moving speed was 100µm/s to 10000µm/s.

Source powder containing ATO was provided on a glass substrate in the same process condition as the first embodiment of the inventive concepts to form an ion storage layer of 350nm to 400nm thickness according to a comparative example 1.

As shown in (a) and (b) of FIG. 6, the source powder was observed in particle shape on the surface of the ion storage layer containing NiO-TiO₂ according to the first embodiment and on the surface of the ion storage layer containing ATO according to the comparative example 1.

Referring to FIGS. 7 through 9, a glass substrate and source powder containing WO₃ were prepared. The source powder was provided on the glass substrate which was heated at 80°C to form electrochromic layer of 700nm to 800nm thickness. A distance between the glass substrate and a nozzle was kept at 3mm and stage moving speed was 140µm/s to 20000µm/s. An electrochromic device according to the first embodiment was fabricated using a PMMA contained 1M LiClO₄ (PC:EC) electrolyte, the glass substrate having a NiO-TiO₂ ion storage layer according to the first embodiment and the glass substrate having a WO₃ electrochromic layer.

Using the same process condition of the first embodiment, an electrochromic device according to a comparative example 1 was fabricated using the PMMA contained 1M LiClO₄ (PC:EC) electrolyte, the glass substrate having an ATO ion storage layer according to the comparative example 1 and the glass substrate having the WO₃ electrochromic layer.

Using the same process condition of the first embodiment, an electrochromic device according to a comparative example 2 was fabricated using the PMMA contained 1M LiClO₄ (PC:EC) electrolyte the glass substrate without an ion storage layer and the glass substrate having the WO₃ electrochromic layer.

Referring to FIGS. 7 and 8, charge variation and voltage value versus current value was measured on the electrochromic device having the NiO-TiO₂ ion storage layer according to the first embodiment, the electrochromic device having the ATO ion storage layer according to the comparative example 1 and the electrochromic device without the ion storage layer according to the comparative example 2. As shown in FIG. 7, the electrochromic device having the NiO-TiO₂ ion storage layer according to the first embodiment shows more significantly charge variation than the electrochromic devices with the ATO ion storage layer and without the ion storage layer according to the comparative examples 1 and 2.

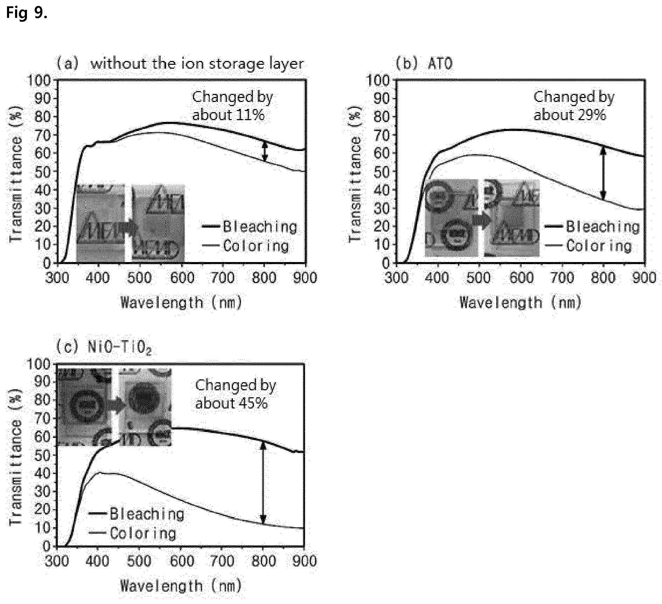

Referring to FIG. 9, transmittance variations versus wavelength with inducing voltage (coloring) and without inducing voltage (bleaching) were measured for the first embodiment of the inventive concepts, the comparative example 1 and the comparative example 2 which were fabricated using the methods described with referring to FIGS. 7 and 8.

As shown in (a) of FIG. 9, the electrochromic device without the ion storage layer according to the comparative example 2 shows the transmittance of which variation is changed up to maximum 11% at the wavelength band of 800nm. As shown in (b) of FIG. 9, the electrochromic device having the ATO ion storage layer according to the comparative example 1 shows the transmittance of which variation is changed up to maximum 29% at the wavelength band of 800nm. As shown in (c) of FIG. 9, the electrochromic device having the NiO-TiO₂ ion storage layer according to the first embodiment of the inventive concepts shows the transmittance of which variation is changed up to maximum 45% at the wavelength band of 800nm.

Therefore, it is understood that the fabricating of the electrochromic device having NiO-TiO₂ ion storage layer according to the first embodiment of the inventive concepts is efficient method to improve reliability of the electrochromic device and to increase efficiency of the electrochromic device.

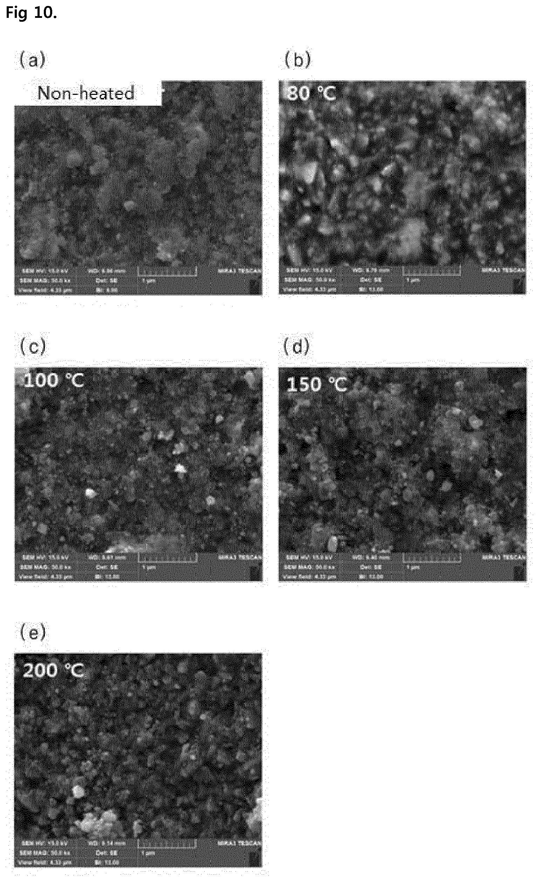

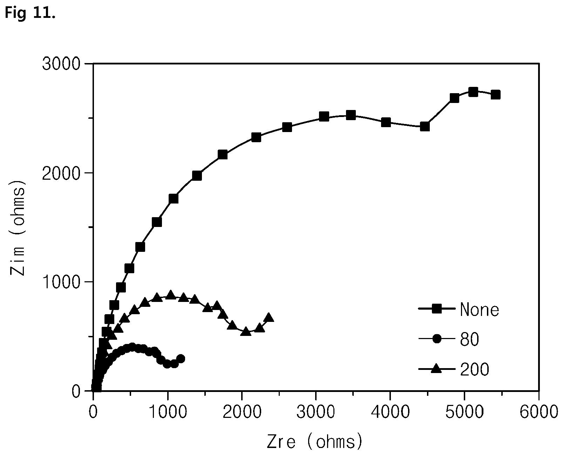

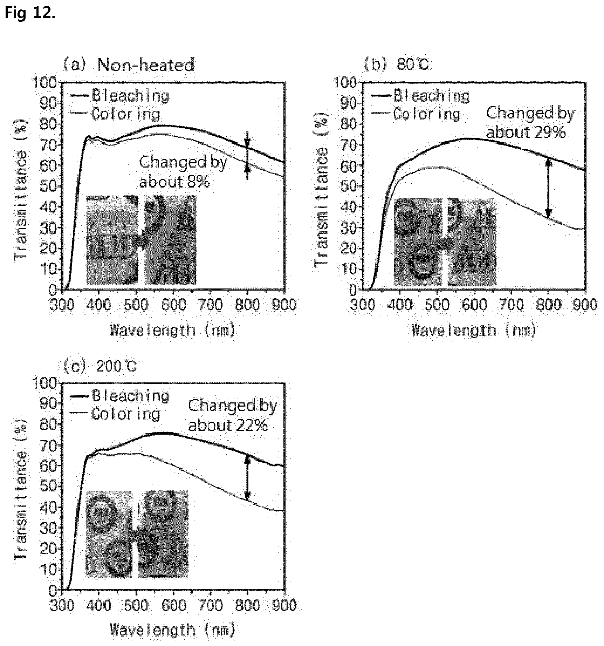

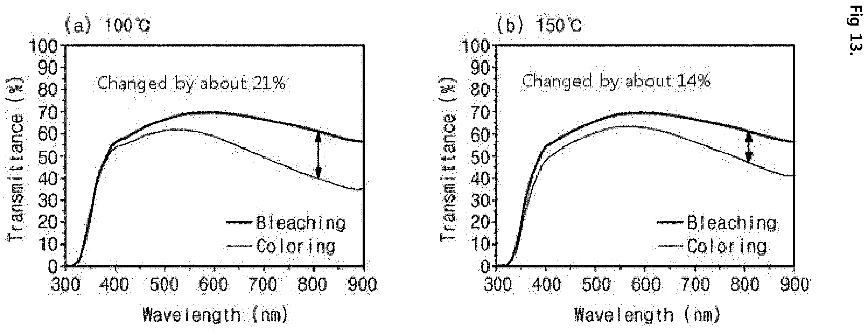

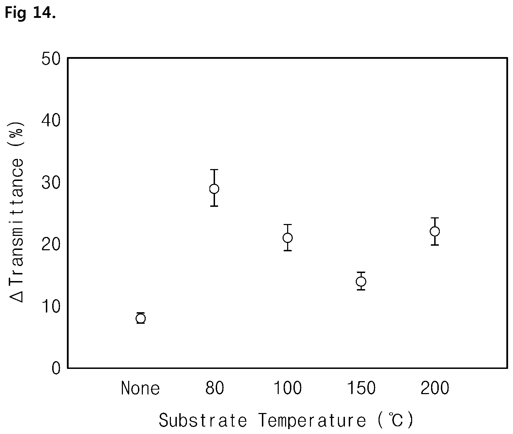

FIG. 10 is a SEM image of a surface of an electrochromic layer according to an embodiment of the inventive concepts and comparative examples, FIG. 11 is a graph illustrating a result of impedance measurement of an electrochromic layer according to an embodiment of the inventive concepts and comparative examples, FIG. 12 is a graph illustrating transmittance variation versus wavelength of an electrochromic device according to an embodiment of the inventive concepts and comparative examples, FIG. 13 is a graph illustrating transmittance variation versus wavelength of an electrochromic device according to an embodiment of the inventive concepts and comparative examples and FIG. 14 is a graph illustrating transmittance variation versus a glass substrate temperature of the first substrate of an electrochromic device according to an embodiment of the inventive concepts and comparative examples.

Referring to FIG. 10, a glass substrate and source powder containing WO₃ were prepared. The source powder was provided on the glass substrate which was heated at 80°C to form an electrochromic layer of 700nm to 800nm thickness according to a second embodiment of the inventive concepts. A distance between the glass substrate and a nozzle was kept at 3mm and stage moving speed was 140µm/s to 20000µm/s.

Using the same process condition as the second embodiment, the source powder was provided on the glass substrate which was heated at 100°C to form an electrochromic layer of 700 to 800nm thickness according to a third embodiment of the inventive concepts.

Using the same process condition as the second embodiment, the source powder was provided on the glass substrate which was heated at 150°C to form an electrochromic layer of 700nm to 800nm thickness according to a fourth embodiment of the inventive concepts.

Using the same process condition as the second embodiment, the source powder was provided on the glass substrate which was heated at 200°C to form an electrochromic layer of 700nm to 800nm thickness according to a fifth embodiment of the inventive concepts.

Using the same process condition as the second embodiment, the source powder was provided on the glass substrate which was not heated to form an electrochromic layer of 700 to 800nm thickness according to a comparative example 3.

Referring to (a) through (e) of FIG. 10, surfaces of the electrochromic layers which were fabricated in accordance with the second, the third, the fourth and the fifth embodiments and the comparative example 3.

As shown in (b), (c), (d) and (e) of FIG. 10, the source powder containing WO₃ are stacked uniformly and densely when the electrochromic layer was fabricated after heating the glass substrate at 80°C, 100°C, 150°C and 200°C according to the second, the third, the fourth and the fifth embodiment. As shown in (a) of FIG. 10, the source powder is not stacked uniformly and densely when the electrochromic layer was fabricated without heating the glass substrate according to the comparative example 3. Therefore, providing the source powder containing WO₃ on the heated glass substrate in accordance with the second embodiment the third embodiment, the fourth embodiment and the fifth embodiment is more efficient method for forming the electrochromic layer with high reliability in comparison with omitting the heating of the glass substrate in accordance with the comparative example 3 because the source powder containing WO₃ are stacked stably.

Referring to FIG. 11, impedances of the electrochromic layers fabricated in accordance with the second embodiment, the fifth embodiment and the comparative example 3 are shown. As shown in FIG. 11, the impedance value is low when the glass substrate was heated at 80°C and 200°C in accordance with the second embodiment and the fifth embodiment of the inventive concepts in comparison with omitting the heating of the substrate in accordance with the comparative example 3.

Referring to FIGS. 12 through 14, the electrochromic devices having the electrochromic layers fabricated using the methods in accordance with the second embodiment through the fifth embodiment of the inventive concepts and the comparative example 3 which is described with referring to FIG. 10 are prepared. The transmittance variations were measured on the electrochromic devices according to the second embodiment through the fifth embodiment of the inventive concepts and the comparative example 3. (a) through (c) of FIG. 12 respectively illustrates the transmittance variations of the electrochromic devices according to the second embodiment and the fifth embodiment of the inventive concepts and the comparative example 3, and (a) and (b) of FIG. 13 respectively illustrates the transmittance variations of the electrochromic devices according to the third embodiment and the fourth embodiment of the inventive concepts. FIG. 14 illustrates the transmittance variation versus according to the substrate temperature of the electrochromic devices according to the second embodiment through the fifth embodiment of the inventive concepts and the comparative example 3.

Referring to (a) through (c) of FIG. 12, transmittance variations versus wavelength of the electrochromic devices of which glass substrate was not heated in accordance with the comparative example 3, the substrate was heated at 80°C in accordance with the second embodiment and the substrate was heated at 200°C in accordance with the fifth embodiment are shown when voltage is applied (coloring) or not applied (bleaching). Referring to (a) and (b) of FIG. 13, transmittance variations versus wavelength of the electrochromic device of which the substrate was heated at 100°C in accordance with the third embodiment and the substrate was heated at 150°C in accordance with the fifth embodiment are shown when voltage is applied (coloring) or not applied (bleaching).

As shown in (a) of FIG. 12, the transmittance is changed up to maximum 8% at the wavelength band of 800nm when the glass substrate was not heated in accordance with the comparative example 3. As shown in (b) of FIG. 12, the transmittance is changed up to maximum 29% at the wavelength band of 800nm when the glass substrate was heated at 80°C in accordance with the second embodiment of the inventive concepts. As shown in (c) of FIG. 12, the transmittance is changed up to maximum 22% at the wavelength band of 800nm when the glass substrate was heated at 200°C in accordance with the fifth embodiment of the inventive concepts.

As shown in (a) of FIG. 13, the transmittance is changed up to maximum 21% at the wavelength band of 800nm when the glass substrate was heated at 100°C in accordance with the fifth embodiment of the inventive concepts. As shown in (b) of FIG. 13, the transmittance is changed up to maximum 14% at the wavelength band of 800nm when the glass substrate was heated at 150°C in accordance with the fifth embodiment of the inventive concepts.

As shown in FIG. 14, the transmittance variation is about 8%, about 29%, about 22%, about 21% and about 14% when the substrate was not heated and the substrate were heated at 80°C, 100°C, 150°C and 200°C in accordance with the comparative example 3 and the second embodiment through the fifth embodiment of the inventive concepts, respectively.

As described above, the electrochromic efficiency is high when the source powder containing WO₃ was provided on the heated substrate in comparison with forming the electrochromic layer by providing source powder containing WO₃ on the glass substrate which was not heated in accordance with the comparative example 3. Therefore, it is shown that providing the source powder on the heated glass substrate in accordance with embodiments of the inventive concepts is efficient method to improve the transmittance variation of the electrochromic device.

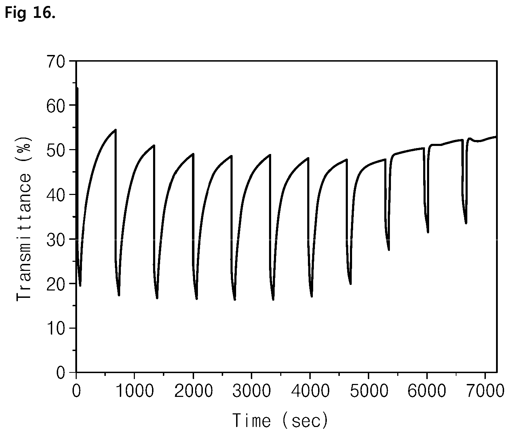

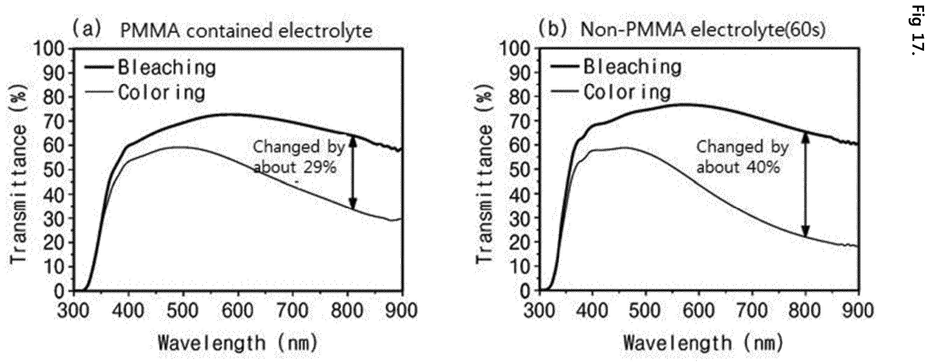

FIG. 15 is a graph illustrating transmittance variation versus wavelength when current is supplied with changing supplying time to an electrochromic device according to an embodiment of the inventive concepts, FIG. 16 is a graph illustrating transmittance variation versus time of an electrochromic device according to an embodiment of the inventive concepts, and FIG. 17 is a graph illustrating transmittance variation versus wavelength of electrolytes of electrochromic device with or without PMMA which are fabricated according to an embodiment of the inventive concepts and a comparative example

Referring to FIGS. 15 through 17, an electrochromic device according to a sixth embodiment of the inventive concepts was fabricated. The electrochromic device of the sixth embodiment includes the NiO-TiO₂ ion storage layer, the WO₃ electrochromic layer and the non-PMMA 1M LiClO₄ (PE:CE) electrolyte which was formed in accordance with the first embodiment with referring to FIG. 6.

An electrochromic device according to a seventh embodiment of the inventive concepts was fabricated. The electrochromic device of the seventh embodiment includes the ATO ion storage layer, the electrochromic layer and the non-PMMA 1M LiClO₄ (PE:CE) electrolyte which are formed in accordance with the comparative example 1.

An electrochromic device according to a seventh embodiment of comparative was fabricated. The electrochromic device of the seventh embodiment includes the ATO ion storage layer, the WO₃ electrochromic layer and the non-PMMA 1M LiClO₄ (PE:CE) electrolyte which are formed in accordance with a comparative example 4.

Referring to (a) and (b) of FIG. 15, current was applied for 50 seconds and 60 seconds to the electrochromic devices fabricated in accordance with the sixth embodiment of the inventive concepts. Then, the transmittance variations versus wavelength band with inducing voltage (coloring) and without inducing voltage (bleaching) can be known.

As shown in (a) of FIG. 15, the transmittance variation is changed up to maximum 53% at the wavelength band of 800nm when current is applied to the electrochromic device fabricated in accordance with the sixth embodiment of the inventive concepts for 50 seconds. As shown in (b) of FIG. 15, the transmittance variation is changed up to maximum 54% at the wavelength band of 800nm when current is applied to the electrochromic device fabricated in accordance with the sixth embodiment of the inventive concepts for 60 seconds.

Referring to FIG. 16, transmittance variation versus time of an electrochromic device according to an embodiment of the inventive concepts is shown. As shown in FIG. 16, the electrochromic device which was fabricated in accordance with the sixth embodiment of the inventive concepts keeps uniform transmittance variation for 0 to 700 seconds.

Referring to (a) and (b) of FIG. 17, transmittance variations versus wavelength band with inducing voltage (coloring) and without inducing voltage (bleaching) are shown in the electrochromic devices which were fabricated in accordance with the comparative example 4 and the seventh embodiment of the inventive concepts. As shown in (a) of FIG. 17, the electrochromic device fabricated in accordance with the comparative example 4 shows the transmittance of which variation is changed up to maximum 29% at the wavelength band of 800nm. As shown in (b) of FIG. 17, the electrochromic device fabricated in accordance with the comparative example 7 shows the transmittance of which variation is changed up to maximum 40% at the wavelength band of 800nm.

Thus, the electrochromic device according to the sixth embodiment of the inventive concepts which includes the NiO-TiO₂ ion storage layer, the WO₃ electrochromic layer and the non-PMMA 1m LiClO₄ (PC:EC) electrolyte has significantly high transmittance variation in comparison with the electrochromic device of the seventh embodiment of the inventive concepts which includes the ATO ion storage layer, the WO₃ electrochromic layer and the non-PMMA 1M LiClO₄ (PC:EC) electrolyte. In other words, it is understood that the fabricating of the electrochromic device using the NiO-TiO₂ ion storage layer is an efficient method to improve electrochromic efficiency.

Further, the electrochromic device according to the comparative example 4 which includes the ATO ion storage layer, the WO₃ electrochromic layer and the PMMA 1m LiClO₄ (PC:EC) electrolyte has significantly low transmittance variation in comparison with the electrochromic device of the seventh embodiment of the inventive concepts which includes the ATO ion storage layer, the WO₃ electrochromic layer and the non-PMMA 1M LiClO₄ (PC:EC) electrolyte. In other words, it is understood that the fabricating of the electrochromic device using the non-PMMA 1M LiClO₄ (PC:EC) electrolyte is an efficient method to improve electrochromic efficiency.

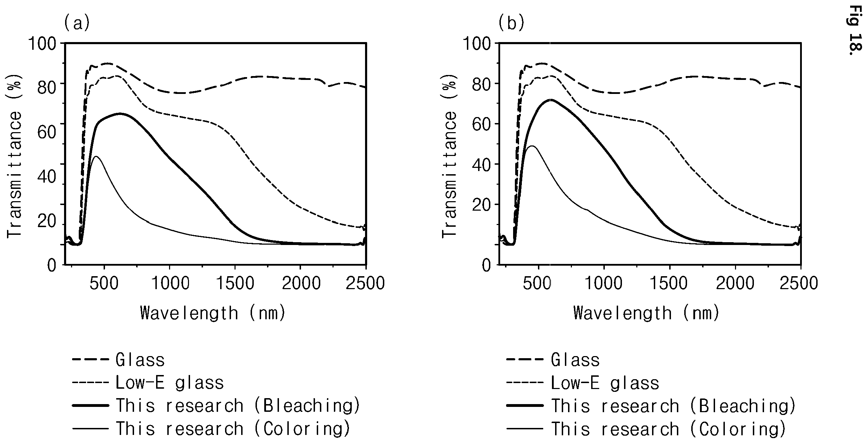

FIG. 18 is a graph illustrating transmittance variation versus wavelength of glasses in which electrochromic devices according to embodiments of the inventive concepts and a comparative example are used or not.

Referring to FIGS through 18, an electrochromic device according to an eighth embodiment of the inventive concepts was prepared. The electrochromic device of the eighth embodiment includes the NiO-TiO₂ ion storage layer, the WO₃ electrochromic layer and the non-PMMA 1M LiClO₄ (PE:CE) electrolyte which was formed in accordance with the first embodiment referring to FIG. 6.

An electrochromic device according to a comparative example 5 was prepared. The electrochromic device of the comparative example 5 includes the ATO ion storage layer, the WO₃ electrochromic layer and the non-PMMA 1M LiClO₄ (PE:CE) electrolyte.

According to a comparative example 6, the Low-E glass manufactured and offered by Shin Shin Glass was prepared. The Low-E glass of Shin Shin Glass has metal or metal oxide which is coated thin on the glass surface. According to a comparative example 7, the Low-E glass manufactured and offered by KCC was prepared. The Low-E glass of KCC has metal or metal oxide which is coated thin on the glass surface. According to a comparative example 8, a conventional glass which has been offered was prepared

Referring to (a) and (b) of FIG. 18, transmittance variations versus wavelength of the Low-E glass according to the comparative example 6 and the conventional glass according to the comparative example 8 are shown when voltage is applied (coloring) or not applied (bleaching) to the electrochromic devices according to the eighth embodiment of the inventive concepts and the comparative example 5.

As shown in (a) and (b) of FIG. 18 and the following table 1, it is shown that the transmittance is 57.8% in a band region of 400nm to 1100nm, 47.5% in a band region of 780nm to 1200nm and 24.5% in a band region of 950nm to 2500nm when voltage is not applied to the electrochromic device according to the eighth embodiment of the inventive concepts (bleaching).

It is shown that the transmittance is 21.3% in a band region of 400nm to 1100nm, 8.7% in a band region of 780nm to 1200nm and 4.8% in a band region of 950nm to 2500nm when voltage is applied to the electrochromic device according to the eighth embodiment of the inventive concepts (coloring).

It is shown that the transmittance is 62.0% in a band region of 400nm to 1100nm, 50.6% in a band region of 780nm to 1200nm and 24.7% in a band region of 950nm to 2500nm when voltage is not applied to the electrochromic device according to the comparative example 5 (bleaching).

It is shown that the transmittance is 28.3% in a band region of 400nm to 1100nm, 14.0% in a band region of 780nm to 1200nm and 6.1% in a band region of 950nm 2500nm when voltage is applied to the electrochromic device according to the comparative example 5 (coloring).

It is shown that the transmittance of the Low_E glass according to the comparative example 6 is 75.4% in a band region of 400nm to 1100nm, 65.8% in a band region of 780nm to 1200nm and 51.9% in a band region of 950nm to 2500nm.

It is shown that the transmittance of the Low E glass according to the comparative example 7 is 24.6% in a band region of 780nm to 1200nm.

It is shown that the transmittance of the conventional glass according to the comparative example 8 is 83.8% in a band region of 400nm to 1100nm, 77.2% in a band region of 780nm to 1200nm and 78.1% in a band region of 950nm to 2500nm.

**[Table 1]**

| Sample | Before/After Electrochromic | Transmittance of Solar heat ray (%) | | |
|---|---|---|---|---|
| | | 400∼1100 nm | 780∼1200 nm | 950∼2500nm |
| Eighth Embodiment | Before | 57.8 | 47.5 | 24.5 |
| | After | 21.3 | 8.7 | 4.8 |
| Comparative Example 5 | Before | 62.0 | 50.6 | 24.7 |
| | After | 28.3 | 14.0 | 6.1 |
| Low-E glass (by S.S Glass) | - | 75.4 | 65.8 | 51.9 |
| Low-E glass (by KCC) | - | - | 24.6 | - |
| Conventional Glass | - | 83.8 | 77.2 | 78.1 |

Thus, the electrochromic device according to the eighth embodiment of the inventive concepts which includes the NiO-TiO₂ ion storage layer, the WO₃ electrochromic layer and the non-PMMA 1M LiClO₄ (PC:EC) electrolyte has significantly low transmittance in comparison with the electrochromic device of the comparative example 5 which includes the ATO ion storage layer, the WO₃ electrochromic layer and the non-PMMA 1M LiClO₄ (PC:EC) electrolyte, the Low-E glass according to a comparative example 6 which is manufactured and offered by Shin Shin Glass and has metal or metal oxide coated thin on the glass surface, the Low-E glass according to a comparative example 6 which is manufactured and offered by KCC and has metal or metal oxide coated thin on the glass surface and the conventional glass according to the comparative example 8 which is offered commonly.

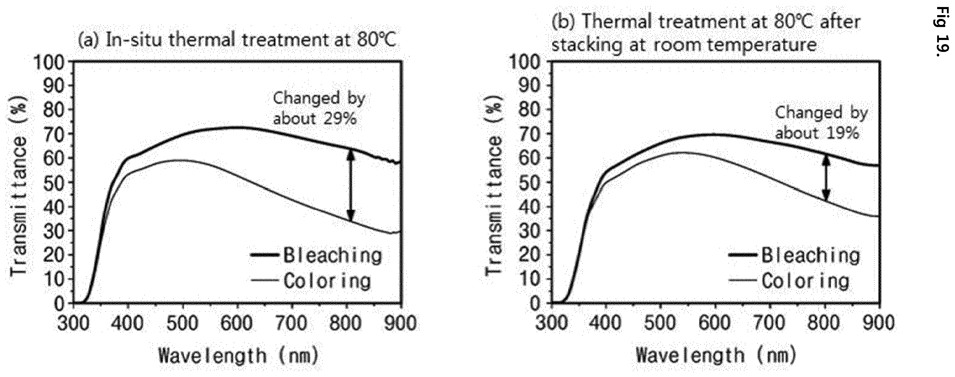

FIG. 19 is a graph illustrating transmittance variation versus wavelength of an electrochromic device according to an embodiment of the inventive concepts and a comparative example.

Referring to FIG. 19, an electrochromic device according to a ninth embodiment of the inventive concepts was prepared the electrochromic layer of the ninth embodiment includes the ATO ion storage layer formed in accordance with the comparative example 1, the WO₃ electrochromic layer formed in accordance with the second embodiment of the inventive concepts and the PMMA contained 1M LiClO₄ (PC:EC) electrolyte. An electrochromic device according to a comparative example 9 of which WO₃ source powder was provided on a non-heated substrate and then the substrate was heated at 80°C is prepared. The electrochromic device of the comparative example 9 has the ATO ion storage layer, the WO₃ electrochromic layer and the PMMA contained 1M LiClO₄ (PE:EC) which are formed in accordance with the comparative example 1.

Referring to (a) and (b) of FIG. 19, transmittance variations versus wavelength of the electrochromic devices which were fabricated in accordance with the ninth embodiment of the inventive concepts and the comparative example 9 when voltage is applied (coloring) or no applied (bleaching). As shown in (a) of FIG. 19, the transmittance variation is changed up to maximum 29% at the wavelength band of 800nm when the electrochromic device was fabricated in accordance with the ninth embodiment of the inventive concepts, and the transmittance variation is changed up to maximum 19% at the wavelength band of 800nm when the electrochromic device was fabricated in accordance with the comparative example 9.

Therefore, it is understood that the fabricating of the electrochromic device which includes the ATO ion storage layer, the WO₃ electrochromic layer and the PMMA contained 1M LiClO₄ (PE:EC) electrolyte and the WO₃ source powder was provided on the substrate after heating the substrate at 80°C in accordance with the ninth embodiment of the inventive concepts is an efficient method to improve electrochromic efficient of the electrochromic device in comparison with the fabricating of the electrochromic device which includes the ATO ion storage layer, the WO₃ electrochromic layer and the PMMA contained 1M LiClO₄ (PE:EC) electrolyte and the WO₃ source powder was provided on the substrate and the substrate was heated at 80°C in accordance with the comparative example 9.

According to the inventive concepts, the electrochromic device including the electrochromic layer and the ion storage layer may include a first substrate; a second substrate opposite the first substrate; an electrolyte provided between the first substrate and the second substrate; a first electrode provided between the first substrate and the electrolyte; an ion storage layer comprising titanium oxide and nickel oxide provided between the first electrode and the electrolyte, wherein particles of the nickel oxide and the titanium oxide are observed in particle shape; a second electrode provided between the second substrate and the electrolyte; and an electrochromic layer provided between the second electrode and the electrolyte.

The source powder containing nickel oxide and titanium oxide may be provided to the heated substrate to form the ion source layer and the electrochromic layer. Thus, properties of the ion storage layer and the electrochromic layer may be improved and process cost may be saved and it is available to fabricate the electrochromic device with a large area. Further, as described above, the ion storage layer may contain the nickel oxide and the titanium oxide such that properties of the ion storage layer can be improved. Therefore, the electrochromic device with improved electrochromic efficiency and high reliability may be provided

The electrochromic devices according to embodiments of the inventive concepts may be applied to various industry fields such as a smart window, a building exterior material, a display device and so on.

While the inventive concepts have been described with reference to exemplary embodiments, it will be apparent to those skilled in the art that various changes and modifications may be made without departing from the scopes of the claims. Therefore, it should be understood that the above embodiments are not limiting, but illustrative. Thus, the scopes of the inventive concepts are to be determined by the broadest permissible interpretation of the following claims, with due account being taken of any equivalents (Article 2 of the Protocol on the Interpretation of Article 69 EPC), and shall not be restricted or limited by the foregoing description.

## Claims

1. An electrochromic device comprising:
a first substrate (112a);
a second substrate (112b) opposite the first substrate (112a);
an electrolyte (350) provided between the first substrate (112a) and the second substrate (112b);
a first electrode (310) provided between the first substrate (112a) and the electrolyte (350);
an ion storage layer (330) comprising titanium oxide and nickel oxide provided between the first electrode (310) and the electrolyte (350), wherein particles of the nickel oxide and the titanium oxide are observable by SEM in particle shape;
a second electrode (320) provided between the second substrate (112b) and the electrolyte (350); and
an electrochromic layer (340) provided between the second electrode (320) and the electrolyte (350).

2. The electrochromic device of claim 1, wherein the electrolyte (350) comprises a non-PMMA electrolyte.

3. The electrochromic device of claim 1, wherein heat ray transmittance to the first light comprising visible light region of an incident light is 22% and less, the heat ray transmittance to the second light comprising infrared region of the incident light is 9% and less.

4. The electrochromic device of claim 1, wherein the electrochromic layer (340) comprises tungsten oxide.

5. The electrochromic device of claim 4, wherein particles of the tungsten oxide are observed in the electrochromic layer.

6. A method of fabricating an electrochromic device comprising:
preparing source powder (244) in a powder storage tank (240);
accelerating the source powder (244) using pressure difference between the powder storage tank (240) and a chamber (100);
heating a substrate (112) in the chamber (100); and
providing the accelerated source powder (244) to the heated substrate (112) to form at least one of an ion storage layer (330) or an electrochromic layer (340);
wherein the source powder comprises first source powder containing nickel oxide and titanium oxide,
the heating of the substrate (112) in the chamber (100) comprises heating a first substrate (112a) in the chamber (100), and
the first source powder which is accelerated using the pressure difference between the powder storage tank (240) and the chamber (100) is provided to the first substrate (112a) to form the ion storage layer (330).

7. The method of claim 6, wherein the source powder (244) comprises second source powder containing tungsten oxide,
the heating of the substrate (112) in the chamber (100) comprises heating a second substrate (112b) in the chamber (100), and
the second source powder which is accelerated using the pressure difference between the powder storage tank (240) and the chamber (100) is provided to the second substrate to form the electrochromic layer (340).

8. The method of claim 6, wherein the source powder (244) comprises first source powder containing nickel oxide and titanium oxide and second source powder containing tungsten oxide,
the heating of the substrate (112) in the chamber (100) comprises heating the first and the second substrates (112a, 112b) in the chamber (100), and
the first source powder and the second source powder which are accelerated using the pressure difference between the powder storage tank (240) and the chamber (100) are provided to the first substrate (112a) and the second substrate (112b) to form the ion storage layer (330) and the electrochromic layer (340), respectively, wherein temperature of the first substrate (112a) and the second substrate (112b) are different to each other.

9. The method of claim 8, wherein the temperature of the first substrate (112a) is higher than the temperature of the second substrate (112b).

## Patentansprüche

1. Elektrochrome Vorrichtung, die Folgendes umfasst:
ein erstes Substrat (112a);
ein zweites Substrat (112b) gegenüber dem ersten Substrat (112a);
einen Elektrolyten (350), der zwischen dem ersten Substrat (112a) und dem zweiten Substrat (112b) vorgesehen ist;
eine erste Elektrode (310), die zwischen dem ersten Substrat (112a) und dem Elektrolyten (350) vorgesehen ist;
eine Ionenspeicherschicht (330), die Titanoxid und Nickeloxid umfasst und zwischen der ersten Elektrode (310) und dem Elektrolyten (350) vorgesehen ist, wobei Partikel des Nickeloxids und des Titanoxids durch SEM in Partikelform beobachtet werden können;
eine zweite Elektrode (320), die zwischen dem zweiten Substrat (112b) und dem Elektrolyten (350) vorgesehen ist; und
eine elektrochrome Schicht (340), die zwischen der zweiten Elektrode (320) und dem Elektrolyten (350) vorgesehen ist.

2. Elektrochrome Vorrichtung nach Anspruch 1, wobei der Elektrolyt (350) einen Nicht-PMMA-Elektrolyten umfasst.

3. Elektrochrome Vorrichtung nach Anspruch 1, wobei die Wärmestrahlungsdurchlässigkeit für das erste Licht, das den sichtbaren Lichtbereich eines einfallenden Lichts umfasst, 22% und weniger beträgt und die Wärmestrahlungsdurchlässigkeit für das zweite Licht, das den Infrarotbereich des einfallenden Lichts umfasst, 9% und weniger beträgt.

4. Elektrochrome Vorrichtung nach Anspruch 1, wobei die elektrochrome Schicht (340) Wolframoxid umfasst.

5. Elektrochrome Vorrichtung nach Anspruch 4, wobei Partikel des Wolframoxids in der elektrochromen Schicht beobachtet werden.

6. Verfahren zur Herstellung einer elektrochromen Vorrichtung, wobei das Verfahren Folgendes umfasst:
Herstellen des Quellpulvers (244) in einem Pulverspeichertank (240);
Beschleunigen des Quellpulvers (244) unter Verwendung einer Druckdifferenz zwischen dem Pulverspeichertank (240) und einer Kammer (100);
Erhitzen eines Substrats (112) in der Kammer (100); und
Bereitstellen des beschleunigten Quellpulvers (244) für das erhitzte Substrat (112), um mindestens eine Ionenspeicherschicht (330) oder eine elektrochrome Schicht (340) zu bilden;
wobei das Quellpulver ein erstes Quellpulver umfasst, das Nickeloxid und Titanoxid enthält,
wobei das Erhitzen des Substrats (112) in der Kammer (100) das Erhitzen eines ersten Substrats (112a) in der Kammer (100) umfasst und
das erste Quellpulver, das unter Verwendung der Druckdifferenz zwischen dem Pulverspeichertank (240) und der Kammer (100) beschleunigt wird, dem ersten Substrat (112a) bereitgestellt wird, um die Ionenspeicherschicht (330) zu bilden.

7. Verfahren nach Anspruch 6, wobei das Quellpulver (244) ein zweites Quellpulver umfasst, das Wolframoxid enthält,
wobei das Erhitzen des Substrats (112) in der Kammer (100) das Erhitzen eines zweiten Substrats (112b) in der Kammer (100) umfasst und
das zweite Quellpulver, das unter Verwendung der Druckdifferenz zwischen dem Pulverspeichertank (240) und der Kammer (100) beschleunigt wird, dem zweiten Substrat bereitgestellt wird, um die elektrochrome Schicht (340) zu bilden.

8. Verfahren nach Anspruch 6, wobei das Quellpulver (244) Nickeloxid und Titanoxid enthaltendes Erstquellpulver und Wolframoxid enthaltendes Zweitquellpulver umfasst,
wobei das Erhitzen des Substrats (112) in der Kammer (100) das Erhitzen des ersten und des zweiten Substrats (112a, 112b) in der Kammer (100) umfasst und
das erste Quellpulver und das zweite Quellpulver, die unter Verwendung der Druckdifferenz zwischen dem Pulverspeichertank (240) und der Kammer (100) beschleunigt werden, dem ersten Substrat (112a) und dem zweiten Substrat (112b) bereitgestellt werden, um die Ionenspeicherschicht (330) bzw. die elektrochrome Schicht (340) zu bilden, wobei die Temperatur des ersten Substrats (112a) und des zweiten Substrats (112b) voneinander verschieden sind.

9. Verfahren nach Anspruch 8, wobei die Temperatur des ersten Substrats (112a) höher ist als die Temperatur des zweiten Substrats (112b).

## Revendications

1. Dispositif électrochrome comprenant :
un premier substrat (112a) ;
un deuxième substrat (112b) opposé au premier substrat (112a) ;
un électrolyte (350) disposé entre le premier substrat (112a) et le deuxième substrat (112b) ;
une première électrode (310) prévue entre le premier substrat (112a) et l'électrolyte (350) ;
une couche de stockage d'ions (330) comprenant de l'oxyde de titane et de l'oxyde de nickel disposée entre la première électrode (310) et l'électrolyte (350), dans lequel les particules de l'oxyde de nickel et de l'oxyde de titane sont observables par SEM sous forme de particules ;
une deuxième électrode (320) prévue entre le deuxième substrat (112b) et l'électrolyte (350) ; et
une couche électrochrome (340) disposée entre la deuxième électrode (320) et l'électrolyte (350).

2. Dispositif électrochrome selon la revendication 1, dans lequel l'électrolyte (350) comprend un électrolyte non PMMA.

3. Dispositif électrochrome selon la revendication 1, dans lequel la transmittance des rayons thermiques à la première lumière comprenant la région de lumière visible d'une lumière incidente est de 22% ou moins, la transmittance des rayons thermiques à la deuxième lumière comprenant la région infrarouge de la lumière incidente est de 9% et moins.

4. Dispositif électrochrome selon la revendication 1, dans lequel la couche électrochrome (340) comprend de l'oxyde de tungstène.

5. Dispositif électrochrome selon la revendication 4, dans lequel des particules de l'oxyde de tungstène sont observées dans la couche électrochrome.

6. Procédé de fabrication d'un dispositif électrochrome comprenant :
la préparation de la poudre source (244) dans un réservoir de stockage de poudre (240) ;
l'accélération de la poudre source (244) en utilisant la différence de pression entre le réservoir de stockage de poudre (240) et une chambre (100) ;
le chauffage d'un substrat (112) dans la chambre (100); et
la fourniture de la poudre source accélérée (244) au substrat chauffé (112) pour former au moins l'une d'une couche de stockage d'ions (330) ou d'une couche électrochrome (340) ;
dans lequel la poudre source comprend une première poudre source contenant de l'oxyde de nickel et de l'oxyde de titane,
le chauffage du substrat (112) dans la chambre (100) comprend le chauffage d'un premier substrat (112a) dans la chambre (100), et
la première poudre source qui est accélérée en utilisant la différence de pression entre le réservoir de stockage de poudre (240) et la chambre (100) est fournie au premier substrat (112a) pour former la couche de stockage d'ions (330).

7. Procédé selon la revendication 6, dans lequel la poudre source (244) comprend une deuxième poudre source contenant de l'oxyde de tungstène,
le chauffage du substrat (112) dans la chambre (100) comprend le chauffage d'un deuxième substrat (112b) dans la chambre (100), et
la deuxième poudre source qui est accélérée en utilisant la différence de pression entre le réservoir de stockage de poudre (240) et la chambre (100) est fournie au deuxième substrat pour former la couche électrochrome (340).

8. Procédé selon la revendication 6, dans lequel la poudre source (244) comprend une première poudre source contenant de l'oxyde de nickel et de l'oxyde de titane et une deuxième poudre source contenant de l'oxyde de tungstène,
le chauffage du substrat (112) dans la chambre (100) comprend le chauffage des premier et deuxième substrats (112a, 112b) dans la chambre (100), et
la première poudre source et la deuxième poudre source qui sont accélérées en utilisant la différence de pression entre le réservoir de stockage de poudre (240) et la chambre (100) sont prévues au premier substrat (112a) et au deuxième substrat (112b) pour former la couche de stockage d'ions (330) et la couche électrochrome (340), respectivement, dans lequel la température du premier substrat (112a) et du deuxième substrat (112b) est différente l'une de l'autre.

9. Procédé selon la revendication 8, dans lequel la température du premier substrat (112a) est supérieure à la température du deuxième substrat (112b).
